# EUROPÄISCHE PATENTSCHRIFT

(11) **EP 0 493 731 B1**
(45) Veröffentlichungstag und Bekanntmachung des Hinweises auf die Patenterteilung: **26.10.1994**
(21) Anmeldenummer: 91121469.0
(22) Anmeldetag: 14.12.1991
(51) Int. Cl.: B60G 11/12, F16F 1/38

(54) **Elastisches Lager**
Flexible bearing
Flexibloc pour articulation

(30) Priorität: 29.12.1990 DE 4042201
(43) Veröffentlichungstag der Anmeldung: 08.07.1992
(73) Patentinhaber: Jörn GmbH, D-70736 Fellbach (DE); MERCEDES-BENZ AG, 70327 Stuttgart (DE)
(72) Erfinder: Zawadzki, Bernd, W-7054 Korb (DE); Zadro, Josef, W-7000 Stuttgart 50 (DE); Beuss, Hartmut, W-7000 Stuttgart 61 (DE); Lenerz, Rudolf, W-7000 Stuttgart 60 (DE); Eberhardt, Alfred, W-7000 Stuttgart 60 (DE); Bronner, Peter, W-7000 Stuttgart 50 (DE)
(74) Vertreter: Neubauer, Hans-Jürgen, Dipl.-Phys.

(56) Entgegenhaltungen:
- AT-A- 357 882
- CH-A- 394 723
- DE-A- 1 625 561
- DE-A- 2 337 872
- DE-B- 1 109 045
- US-A- 2 103 729
- US-A- 2 346 574

## Beschreibung

Die Erfindung betrifft ein elastisches Lager, insbesondere zur Lagerung eines Federauges einer Blattfeder an einem Fahrzeug, nach dem Oberbegriff des Anspruchs 1.

Ein bekanntes, elastisches Lager (DE-A- 23 37 872) besteht aus einem Gummi-Metallteil mit einem inneren Metallrohr als erstem Lagerteil, mit einem äußeren, zylindrischen Metallrohr, das einen axialen Schlitz aufweist und das unter radialer Vorspannung bei der Montage in ein äußeres Aufnahmeauge einpreßbar ist, wobei der Schlitz geschlossen wird und mit einem zwischen beiden Metallteilen festhaftend einvulkanisierten Gummikörper.

Das vorstehend beschriebene Lager ist auch für eine Federaugenlagerung verwendbar, wobei das Gummi-Metallteil dann in das Federauge einzupressen ist und das innere Metallteil mit einem Rahmenteil bzw. einem Lagerbock des Fahrzeugaufbaus verbunden ist.

Es hat sich gezeigt, daß ein solches Lager den Anforderungen an eine Federaugenlagerung nicht genügt: Aus Gründen der Fahrzeugakustik soll die Lagerung in Radialrichtung relativ weich sein, so daß der Gummikörper eine bestimmte Weichheit und Dicke aufweisen muß. Dies führt aber dazu, daß das Lager in Querrichtung bzw. in der axialen Lagerrichtung ebenfalls relativ weich ist. Dies wirkt sich ungünstig auf die Führung der Blattfeder aus, die in Fahrzeugquerrichtung zur Vermeidung eines schwimmenden Fahrverhaltens steif gelagert sein soll. Eine weiche Lagerung in Fahrzeugquerrichtung führt zu großen Auslenkungen und das Federauge kann stirnseitig an die Wangen der aufnehmenden Lagerböcke anschlagen, wodurch eine erhebliche Geräuschentwicklung entsteht und die Lagerung beschädigt oder zerstört werden kann.

Bei starker, kardanischer Belastung besteht zudem die Gefahr, daß die stirnseitigen Randbereiche des Gummikörpers stark gequetscht und dadurch die Dauerhaltbarkeit reduziert wird.

Aufgabe der Erfindung ist es demgegenüber, ein elastisches Gummilager zu schaffen, das in radialer Richtung relativ weich und in axialer Richtung relativ hart ist und das dadurch insbesondere zur Federaugenlagerung gut geeignet ist.

Diese Aufgabe wird bei einem gattungsgemäßen Lager mit den kennzeichnenden Merkmalen des Anspruchs 1 gelöst.

Gemäß Anspruch 1 sind auf das innere Metallteil beidseitig Ringe aufgesteckt, die im eingepreßten Zustand an den jeweils zugeordneten Stirnseiten des Gummikörpers anliegen und axial fixiert sind, so daß der Gummikörper durch die Ringe in Axialrichtung abgestützt ist.

Damit wird vorteilhaft erreicht, daß der Gummikörper so ausgelegt werden kann, daß das Lager bei radialen Belastungen relativ weich ist und in Axialrichtung dennoch relativ steif ist. Damit ist die wesentliche Anforderung bei der Verwendung als Federaugenlager erfüllt mit einer relativ starren Führung der Blattfedern in Fahrzeugquerrichtung und einer relativ weichen Anbindung bei Einfedervorgängen.

Gemäß Anspruch 2 sind die seitlichen Ringe durch die seitlichen Wangen des Lagerbocks im fertig montierten Zustand axial fixiert. Die Ringe können daher im Herstellzustand auf das innere Metallrohr formschlüssig und lose aufgesteckt sein und werden erst bei der Fertigmontage axial in ihrer Abstützposition fixiert.

Nach Anspruch 3 wird vorgeschlagen, daß im Herstellzustand die Ringe auf das innere Metallteil aufgepreßt und dadurch fixiert sind. Dabei soll zwischen jedem Ring und der jeweils zugeordneten Stirnseite des Gummikörpers ein Abstand als Freiraum verbleiben. Dieser Freiraum ist so groß dimensioniert, daß er im eingepreßten Einbauzustand durch die stirnseitige Gummiauswölbung in Folge der radialen Vorspannung ausgefüllt ist und der Gummikörper mit nur geringer Vorspannung in Axialrichtung an den Ringen anliegt.

Damit wird erreicht, daß die Ringe bereits im Herstellzustand des Gummi-Metallteils aufgepreßt und vormontiert werden können. Erst beim Einpreßvorgang wird der Freiraum zwischen den Stirnseiten des Gummikörpers und den Ringen durch Gummiauswölbung ausgefüllt. Wenn die Ringe schon von vornherein im Herstellzustand bis an die Stirnseiten des Gummikörpers herangeführt worden wären, bestünde die Wahrscheinlichkeit, daß sie durch den beim Einpreßvorgang sich aufbauenden Gummidruck wieder axial nach außen in eine undefinierte Lage bzw. vom inneren Metallteil heruntergeschoben würden. Mit der vorstehenden Maßnahme wird dagegen erreicht, daß der axiale Gummidruck auf die Ringe nach dem Einpressen relativ gering ist und die Ringe ihre Abstützwirkung erst bei einer axialen Belastung des Lagers ausüben.

Bei der vorteilhaften Vormontage der Ringe und wegen der axialen Belastung durch den sich stirnseitig auswölbenden Gummikörper beim Einpreßvorgang ist es erforderlich, daß die Ringe nach dem Aufpreßvorgang fest auf dem inneren Metallteil sitzen. Dies wird zweckmäßig durch eine umlaufende, gleichmäßige Flächenpressung erreicht. Eine solche Flächenpressung verhindert auch das Eindringen von Partikeln und Feuchtigkeit in die Anlagefläche zwischen den Ringen und dem inneren Metallteil. Dadurch werden die Korrosion und Abnützungen verringert. Um eine solche, stabile und gleichmäßige Flächenpressung zu erreichen, wird nach Anspruch 4 vorgeschlagen, daß die Ringe aufgepreßt sind und vor dem Aufpressen einen Innendurchmesser aufweisen, der kleiner ist als der Außendurchmesser des inneren, zylindrischen Metallteils. Damit ergibt sich bezüglich des inneren Metallteils an jedem Ring ein zur Ringmitte gerichteter Ringüberstand.

Im Bereich des Ringüberstands sind an beiden stirnseitigen Ringseiten Fasen bzw. konisch zur Ringmitte verlaufende Schrägflächen mit einem dazwischenliegenden, zylindrischen Flächenbereich angebracht. Zudem ist das Ringmaterial weicher als das Material für das innere Metallteil.

Damit wird erreicht, daß beim Aufpressen des Rings der Ringüberstand im Bereich der Fasen abgeschert wird und sich der Ring am gesamten Umfang des inneren Metallteils gleichmäßig flächig mit einer vorgegebenen Flächenpressung bzw. mit einer vorgegebenen Abzugkraft anlegt. Toleranzen im Außendurchmesser des inneren Metallteils und im Innendurchmesser des Rings sind damit unerheblich.

Durch die angebrachten Fasen baut sich das Material beim Abschervorgang nicht auf, sondern springt in einem abscherenden Ring als Ringüberstand ab. Als geeigneter Winkel für die Fasen bzw. die Schrägstellung der Schrägflächen hat sich nach Anspruch 5 ein Winkel von etwa 45° erwiesen.

In einer alternativen Befestigungsmaßnahme für die Ringe nach Anspruch 6 weisen das innere Metallteil und die Ringe an ihren gegenseitigen Anlageflächen eine zugeordnete Profilierung, insbesondere eine in Radialebenen angeordnete Riffelung, auf. Die Ringe sind dabei bevorzugt als Kunststoffringe, die sich radial etwas aufweiten können, aufgeklipst und durch Formschluß der Profilierungen axial fixiert. Dies stellt eine preiswerte und funktionsfähige Lösung für die Herstellung der Ringe und deren Halterung dar.

Nach Anspruch 7 ist der Außendurchmesser der Ringe gleich oder kleiner als der Außendurchmesser des Gummikörpers. Dadurch ist sichergestellt, daß bei betriebsmäßig üblicher, axialer Belastung des Lagers die Stirnseiten der Gummikörper axial an den Ringen elastisch abgestützt werden.

Eine besonders bevorzugte Ausführungsform wird mit Anspruch 8 beansprucht. Auch hier ist der Außendurchmesser der Ringe kleiner als der Außendurchmesser des Gummikörpers, wobei das Außenrohr mit seinen stirnseitigen Enden die Ringe zumindest teilweise übergreift. Damit verbleibt zwischen der Außenrohrinnenfläche und der zylindrischen Außenumfangsfläche der Ringe ein radialer Spalt. Dieser Spalt ist so dimensioniert, daß eine Bewegung des inneren Metallteils mit den darauf fixierten Ringen bei betriebsmäßiger, radialer Auslenkung innerhalb der Spaltbreite mit relativ weicher Federkonstante möglich ist. Bei starker, insbesondere auch kardanischer Belastung, wird jedoch die Spaltbreite überwunden und das Außenrohr geht an wenigstens einem Ring auf Block, so daß die Anordnung wie ein Anschlag wirkt. Damit wird der Gummikörper gegenüber starken und extremen Belastungen geschützt, was die Funktion und Lebensdauer des Lagers verbessert.

Vorteilhaft können mit den seitlichen Ringen auch jeweils zusätzlich ein axialer Anschlag gebildet werden. Dazu wird nach Anspruch 9 vorgeschlagen, die Ringe im Querschnitt mit einer Stufe auszubilden, die sich radial im fertig montierten Zustand wenigstens in den Bereich des äußeren Metallrohrs erstreckt. Zwischen den Stirnseiten des äußeren Metallrohrs und der zugeordneten Stufe ist jeweils ein axialer Spalt vorzusehen. Bei sehr starker axialer Belastung wird dann dieser axiale Spalt überwunden und das äußere Metallrohr geht mit einer Stirnseite an einem Ring auf Block, wobei die Stufe als axialer Anschlag wirkt. Ein solcher, axialer Anschlag kann über die Spaltbreite gut und genau für seine Funktion dimensioniert und eingestellt werden.

Für eine einfache Herstellung und Montage solcher stufenförmiger Ringe werden mit den Ansprüchen 10 und 11 zweigeteilte Ringausführungen vorgeschlagen, wobei nach Anspruch 10 zwei Ringe übereinander und nach Anspruch 11 zwei Ringe hintereinander aufgesteckt sind.

Zweckmäßig wird nach Anspruch 12 im Anschlagbereich am äußeren Metallrohr eine dünne Gummischicht angebracht, so daß bei extrem starken Belastungen mit Anschlag nicht Metall auf Metall schlägt. Diese dünne Gummischicht ist einfach zu realisieren und fällt praktisch durch die Notwendigkeit der Entformung nach dem Vulkanisiervorgang ohne zusätzlichen Aufwand ab.

Es ist allgemein bekannt, die Federeigenschaften, insbesondere die Querdehnung von Gummikörpern durch metallische Zwischenlagen zu beeinflußen. Auch beim vorliegenden Lager ist es, je nach Gegebenheiten, nach Anspruch 13 zweckmäßig, eine Zwischenlage, bevorzugt in der Form eines gerollten Blechteils, in den Gummikörper einzubringen. Die Zwischenlage folgt nach Anspruch 14 vorteilhaft unmittelbar nach einer dünnen Gummischicht auf das innere Metallteil, wobei der axiale Schlitz im Herstellzustand keilförmig bis etwa an die Zwischenlage reicht. Die Montage und Befestigung des erfindungsgemäßen, elastischen Lagers wird nach Anspruch 15 vorteilhaft so durchgeführt, daß das innere Metallteil ein inneres Metallrohr zur Aufnahme eines Schraubenbolzens ist und das elastische Lager bzw. das innere Metallrohr im Einbauzustand von einem U-förmig ausgebildeten, insbesondere mit einem Fahrzeugrahmenteil verbundenen Lagerbock, umfaßt ist. Die Wangen der U-Schenkel liegen dabei etwa im Abstand der Länge des Metallrohrs auseinander, wobei das Metallrohr die größte, axiale Erstreckung des Gummi-Metallteils aufweist. Die Ringe liegen mit ihren äußeren Stirnseiten im Bereich der Stirnseiten des inneren Metallrohrs bzw. liegen die Ringe ggfs. an den Wangen der U-Schenkel an. Nach dem Einpreßvorgang des Gummi-Metallteils ist die Anlage der Ringe an den Wangen nicht mehr nachteilig.

An den Wangen sind gegenüberliegende Bohrungen zur Aufnahme des Schraubenbolzens angebracht, über den das innere Metallteil mit den Wangen verschraubt ist.

Das Gummi-Metallelement und das Federauge müssen zwischen die U-Schenkel eingeführt werden und werden dort so verschraubt, daß sich die U-Schenkel am inneren Metallteil abstützen. Dazu ist es erforderlich, die U-Schenkel gegeneinander zu verspannen. Um dies zu vermeiden, wird mit Anspruch 16 vorgeschlagen, daß eine Bohrung in einer Wange wenigstens dem Durchmesser des Außendurchmessers des angrenzenden Ringes hat und in diese Bohrung eine, die Bohrung ausfüllende Scheibe als Deckel eingesetzt ist, wobei der Deckel im Einbauzustand durch die Verschraubung gegen das innere Metallteil gepreßt ist. Damit liegt das Gummi-Metallelement nur an einem U-Schenkel in axialer Richtung fest, während die andere Seite durch die in Axialrichtung verschiebbare Scheibe beweglich ist. In Radialrichtung stützt sich dagegen die Scheibe in der Bohrung ab, so daß damit ein radial fester Halt gewährleistet ist.

Anhand einer Zeichnung werden Ausführungsbeispiele der Erfindung mit weiteren Einzelheiten, Merkmalen und Vorteilen näher erläutert.

Es zeigen
- Fig. 1: einen Längsschnitt durch ein elastisches Lager als Federaugenlagerung im fertig montierten Zustand,
- Fig. 2: eine Ansicht des Lagers nach Fig. 1 in axialer Richtung am Schnitt entlang der Linie A-A,
- Fig. 3: eine vergrößerte Einzelheit B aus Fig. 1,
- Fig. 4: einen Längsschnitt durch das Gummi-Metallelement aus Fig. 1 im Herstellzustand,
- Fig. 5: eine Ansicht des Teils nach Fig. 4 in Axialrichtung,
- Fig. 6: einen Längsschnitt durch ein fertig montiertes Federaugenlager mit stufenförmigen Ringen,
- Fig. 7: eine vergrößerte Einzelheit C aus Fig. 6 mit abgenommenem Ring,
- Fig. 8: eine erste Ausführungsform eines zweigeteilten, stufenförmigen Rings und
- Fig. 9: eine zweite Ausführungsform eines zweigeteilten, stufenförmigen Rings.

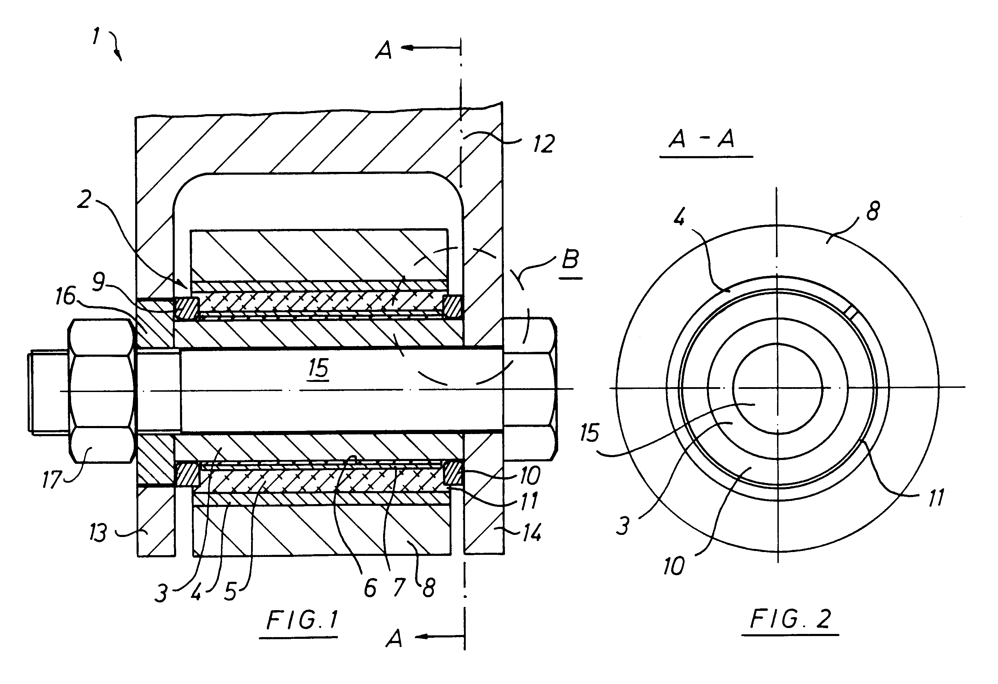

In Fig. 1 ist eine Federaugenlagerung 1 dargestellt, mit einem Gummi-Metallteil 2, das ein inneres, zylindrisches und stabiles Metallrohr 3, ein äußeres, zylindrisches Metallrohr 4 und einen dazwischen festhaftend einvulkanisierten Gummikörper 5 aufweist. Auf das innere Metallrohr 3 folgt radial nach außen eine dünne Gummischicht 6 und eine dünne, metallische Zwischenlage 7 in Form eines gerollten Blechrohrs.

Das Gummi-Metallteil 2 ist unter radialer Vorspannung in ein Federauge 8 eingepreßt.

Auf das innere Metallrohr 3 sind beidseitig Metallringe 9 und 10 so aufgepreßt, daß sie etwa mit den Stirnseiten des inneren Metallrohrs 3 abschließen.

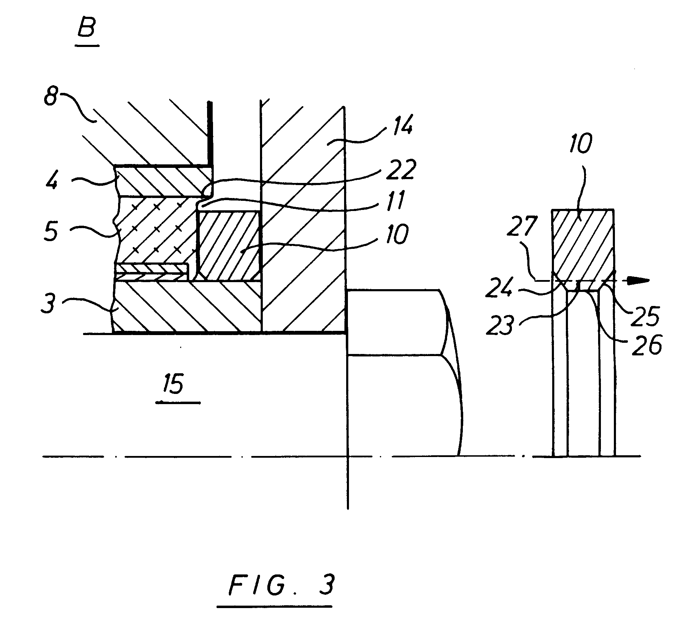

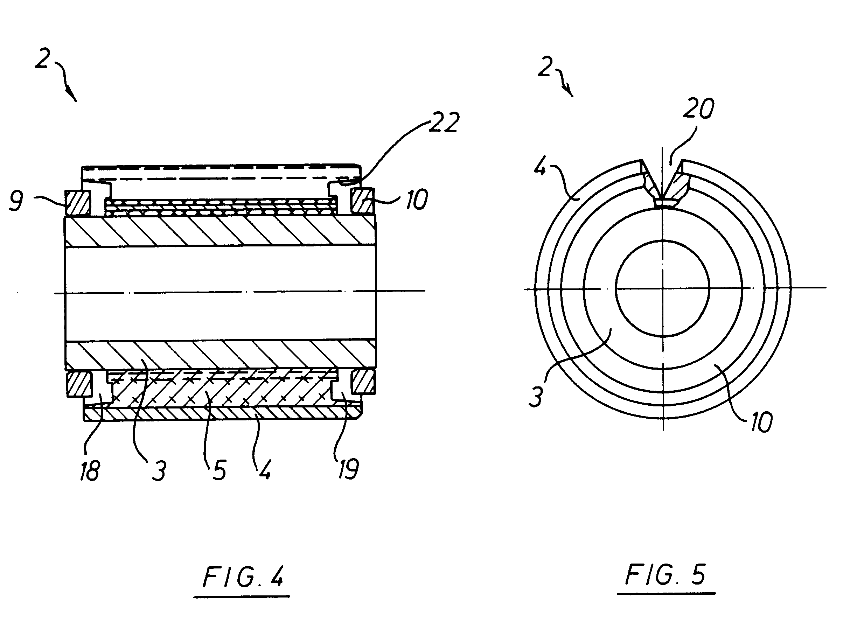

Der Außendurchmesser der Ringe ist kleiner als der Außendurchmesser des Gummikörpers und das äußere Metallrohr 4 übergreift teilweise die Metallringe 9 und 10 in axialer Richtung, so daß ein radialer Spalt 11 zwischen der Außenrohrinnenfläche und der Außenumfangsfläche der Metallringe 9 und 10 gebildet wird. Siehe dazu auch die vergrößerte Darstellung nach Fig. 3. Im Überdeckungsbereich ist an der Außenrohrinnenfläche eine dünne Gummischicht 22 angebracht, die sich auch durch einen geeigneten Enformungsprozeß ergibt (sh. Fig. 3 und auch Fig. 4, wo das Gummi-Metallteil 2 im Herstellzustand gezeigt ist).

Das Gummi-Metallteil 2 und das Federauge 8 sind in einem Lagerbock 12 gehalten, der mit dem Fahrzeugaufbau verbunden ist. Der Lagerbock 12 ist U-förmig ausgebildet und umfaßt mit den U-Schenkeln das Gummi-Metallteil 2 und das Federauge 8. Die U-Schenkel 13, 14 bzw. die inneren Wangen der U-Schenkel 13, 14 haben einen Abstand, der der Länge des inneren Metallrohrs 3 entspricht. Der eine U-Schenkel 14 hat eine Bohrung, die dem Durchmesser eines Schraubenbolzens 15 entspricht, während der andere U-Schenkel 13 eine größere Bohrung aufweist im Durchmesser des Metallrings 9. Diese Bohrung ist durch eine Scheibe 16 ausgefüllt, die ihrerseits eine Bohrung im Durchmesser des Schraubenbolzens 15 enthält. Der Schraubenbolzen ist durch die beiden U-Schenkel 13 und 14, die Scheibe 16 und das innere Metallrohr 3 geführt und mit einer Schraubenmutter 17 verschraubt.

Aus Fig. 4 ist zu ersehen, daß im Herstellzustand des Gummi-Metallteils 2 die Metallringe 9 und 10 stirnseitig auf das innere Metallrohr 3 aufgepreßt sind. Zwischen den Ringen 9 und 10 und den Stirnseiten des Gummikörpers 5 liegen jeweils umlaufende Freiräume 18 und 19, die so dimensioniert sind, daß sie im eingepreßten Einbauzustand, entsprechend Fig. 1, durch die stirnseitigen Gummiauswölbungen in Folge der radialen Vorspannung ausgefüllt sind, so daß sich der Gummikörper 5 im unbelasteten Zustand mit nur geringer Vorspannung in Axialrichtung an die Metallringe 9 und 10 anlegt.

Weiter ist aus Fig. 5 zu ersehen, daß im Gummi-Metallteil 2 im Herstellzustand ein axialer, keilförmiger Schlitz 20 eingebracht ist, der sich beim Einpressen in das Federauge 8 und beim Aufbau der radialen Vorspannung schließt.

Im rechten Teil der Fig. 3 ist der Metallring 10 vergrößert in seinem Herstellzustand gezeigt. Im linken Teil der Fig. 3 ist der Metallring 10 auf gleicher Höhe im aufgepreßten Zustand gezeigt. Dabei ist zu erkennen, daß vor dem Aufpressen der Innendurchmesser des Metallrings 10 kleiner als der Außendurchmesser des inneren Metallrohrs 3 ist, so daß sich ein entsprechend zur Ringmitte hin gerichteter Ringüberstand 23 ergibt.

Im Bereich des Ringüberstands 23 sind an beiden Ringseiten Fasen 24, 25 bzw. konisch zur Ringmitte verlaufende Schrägflächen mit einem dazwischen liegenden, zylindrischen Flächenbereich 26 angebracht.

Das Material des inneren Metallrohrs 3 ist gegenüber dem Ringmaterial hochfester. Dadurch wird beim Aufpressen des Metallrings 10 der Ringüberstand 23 abgeschert, wie dies mit dem Pfeil 27 angedeutet ist.

Das in Verbindung mit den Fig. 1 bis 5 dargestellte, elastische Lager hat folgende Funktion:
Nachdem das Gummi-Metallteil 2, wie in den Fig. 4 und 5 dargestellt, hergestellt wurde, wird es in das Aufnahmeauge 8 unter radialer Vorspannung eingepreßt. Damit werden die Freiräume 18 und 19 durch stirnseitige Auswölbung des Gummikörpers 5 ausgefüllt und der Gummikörper 5 legt sich an die Metallringe 9 und 10 an. Anschließend wird das so vormontierte Gummi-Metallteil 2 mit dem Federauge 8 von unten her in den U-förmigen Lagerbock 12 eingeschoben und mit der Verschraubung bestehend aus dem Schraubenbolzen 15, der Scheibe 16 und der Schraubenmutter 17 befestigt.

Im Fahrbetrieb ist das Lager in radialer Richtung bei entsprechend stark dimensioniertem Gummikörper 5 relativ weich. In Querrichtung wird dagegen das Federauge 8 straff und mit nur geringen Auslenkungen geführt, da sich bei einer Belastung in Axialrichtung des Lagers der Gummikörper 5 stirnseitig an den Metallringen 9 oder 10 abstützt. Die Metallringe 9 und 10 werden gegen eine axiale Verschiebung nach außen über die angrenzenden U-Schenkel 13, 14 gesichert.

Bei sehr starken, radialen Belastungen oder bei kardanischen Belastungen legt sich das äußere Metallrohr 4 in wenigstens einem seiner Endbereiche durch Überwindung des radialen Spaltes 11 an den zugeordneten Metallring 9 oder 10 an, so daß der Gummikörper 5 gegen Beschädigung und Zerstörung bei einer extremen Belastung geschützt ist.

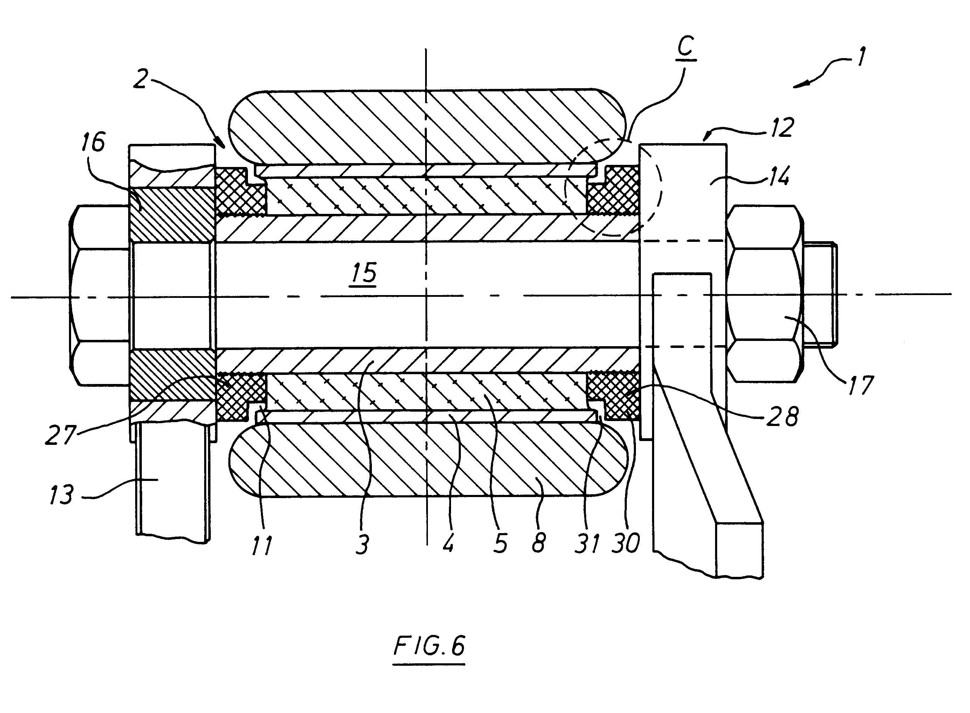

In Fig. 6 ist ein Längsschnitt durch eine weitere Ausführungsform eines fertig montierten Federaugenlagers dargestellt, das in den wesentlichen Bestandteilen und der wesentlichen Funktion mit dem Federaugenlager nach Fig. 1 übereinstimmt, so daß entsprechende Teile mit gleichen Bezugszeichen bezeichnet sind. Der Unterschied zu der Ausführungsform nach Fig. 1 besteht im wesentlichen darin, daß sowohl die Form als auch die Halterung der seitlichen Ringe unterschiedlich ausgeführt sind.

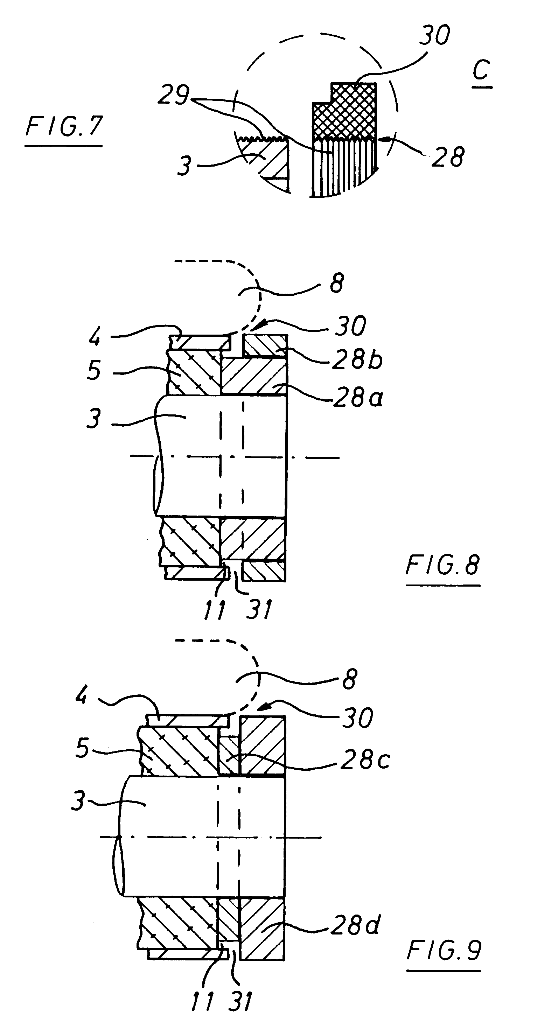

Hier sind Kunststoffringe 27, 28 verwendet und sowohl die Kunststoffringe 27, 28 als auch das innere Metallteil 3 sind an ihren gegenseitigen Anlageflächen mit einer zugeordneten Profilierung als in Radialebenen angeordnete Riffelung 29 versehen (sh. Einzelheit C in Fig. 7). Die Kunststoffringe 27, 28 sind im Montagezustand aufgeklipst und durch Formschluß der Riffelung 27 in Axialrichtung fixiert.

Die Kunststoffringe 27, 28 sind im Querschnitt mit einer Stufe 30 ausgebildet, die sich radial im fertig montierten Zustand in den Bereich des äußeren Metallrohrs 4 erstreckt. Der axial zur Lagermitte hin weisende Ringbereich wird, ebenso wie in der Ausführungsform nach Fig. 1, vom äußeren Metallrohr 4 unter Bildung eines radialen Spalts 11 überdeckt.

Die Stufe 30 ist so gestaltet, daß in Axialrichtung zwischen den Stirnseiten des äußeren Metallrohrs 4 und der zugeordneten Stufe 30 jeweils ein axialer Spalt 31 verbleibt.

Die Ausführungsform nach Fig. 6 mit stufenförmigen Ringen 27, 28 hat die weitere Funktion, daß bei einer starken axialen Belastung der axiale Spalt 31 überwunden wird und das äußere Metallrohr 4 mit einer Stirnseite an einem Ring 27 bzw. 28 auf Block geht, wobei dieser Ring bzw. die Stufe 30 als axialer Anschlag wirkt.

Die stufenförmigen Kunststoffringe 27, 28 in Fig. 6 sind jeweils einstückig ausgebildet. Für eine einfachere Montage und einfachere Herstellung, insbesondere bei einer ebenso möglichen Verwendung von Metallringen, sind in den Fig. 8 und 9 jeweils Ausführungsformen eines zweigeteilten, stufenförmigen Rings angegeben.

Nach Fig. 8 ist auf einen inneren, axial längeren Ring 28a ein zweiter, axial kürzerer Ring 28b zur Bildung der Stufe 30 aufgesteckt. Dabei können alle vorbeschriebenen Haltemaßnahmen verwendet werden. Bevorzugt sind jedoch der innere Ring 28a fest aufgepreßt oder aufgeklipst und der äußere Ring 28b formschlüssig aufgesteckt.

Nach Fig. 9 sind ein erster Ring 28c mit kleinerem Durchmesser auf das innere Metallrohr 3 und ein axial anschließender, zweiter Ring 28d mit größerem Durchmesser zur Bildung der Stufe 30 auf das innere Metallrohr 3 aufgesteckt und je nach den vorliegenden Anforderungen aufgepreßt oder aufgeklipst.

## Patentansprüche

1. Elastisches Lager, insbesondere zur Lagerung eines Federauges einer Blattfeder an einem Fahrzeug,
bestehend aus einem Gummi-Metallteil (2),
mit einem inneren, zylindrischen Metallteil (3) als erstem Lagerteil, das insbesondere mit einem Lagerbock (12) als Rahmenteil des Fahrzeugs verbindbar ist,
mit einem äußeren, zylindrischen Metallrohr (4), das einen axialen Schlitz (20) aufweist und das unter radialer Vorspannung bei der Montage in ein äußeres Aufnahmeauge, insbesondere ein Federauge, einpreßbar ist, wobei der Schlitz geschlossen wird und
mit einem zwischen beiden Metallteilen festhaftend einvulkanisierten Gummikörper (5),
dadurch gekennzeichnet,
daß auf das innere Metallteil (3) beidseitig Ringe (9, 10; 27, 28) aufgesteckt sind, die im eingepreßten Zustand des Gummi-Metallteils (2) an den jeweils zugeordneten Stirnseiten des Gummikörpers (5) anliegen und die axial fixiert sind, so daß der Gummikörper (5) durch die Ringe (9, 10; 27, 28) relativ zum inneren Metallteil (3) in Axialrichtung abgestützt ist.

2. Elastisches Lager nach Anspruch 1, dadurch gekennzeichnet, daß im Herstellzustand die Ringe (9, 10; 27, 28) auf das innere Metallteil (3) lose aufgesteckt und durch seitliche Wangen (U-Schenkel 13, 14 bzw. Scheibe 16) des Lagerbocks (12) im fertig montierten Zustand axial fixiert sind.

3. Elastisches Lager nach Anspruch 1, dadurch gekennzeichnet, daß im Herstellzustand die Ringe (9, 10; 27, 28) auf das innere Metallteil (3) aufgepreßt und dadurch fixiert sind, wobei zwischen jedem Ring (9, 10) und der jeweils zugeordneten Stirnseite des Gummikörpers (5) ein Abstand als Freiraum (18, 19) verbleibt, der so groß dimensioniert ist, daß im eingepreßten Einbauzustand der Freiraum (18, 19) durch die stirnseitige Gummiauswölbung in Folge der radialen Vorspannung ausgefüllt ist und der Gummikörper (5) mit nur geringer Vorspannung in Axialrichtung an den Ringen (9, 10; 27, 28) anliegt.

4. Elastisches Lager nach Anspruch 1 oder 3, dadurch gekennzeichnet, daß die Ringe (9, 10) aufgepreßt sind und vor dem Aufpressen einen Innendurchmesser aufweisen, der kleiner ist als der Außendurchmesser des inneren, zylindrischen Metallteils (3), so daß sich bezüglich des inneren Metallteils (3) an jedem Ring (9, 10) ein zur Ringmitte gerichteter Ringüberstand (23) ergibt,
daß im Bereich des Ringüberstandes (23) an beiden Ringseiten Fasen (24, 25) bzw. konisch zur Ringmitte verlaufende Schrägflächen angebracht sind und
daß das Ringmaterial weicher als das Material für das innere Metallteil (3) ist, so daß beim Aufpressen der Ringüberstand (23) abgeschert wird.

5. Elastisches Lager nach Anspruch 4, dadurch gekennzeichnet, daß der Winkel der Fasen (24, 25) bzw. die Schrägstellung der Schrägflächen etwa 45° beträgt.

6. Elastisches Lager nach Anspruch 1 oder 3, dadurch gekennzeichnet, daß die Ringe (27, 28) und das innere Metallteil (3) an ihren gegenseitigen Anlageflächen eine zugeordnete Profilierung, insbesondere eine in Radialebenen angeordnete Riffelung (29), aufweisen und die Ringe (27, 28) bevorzugt als Kunststoffringe aufgeklipst sind und durch Formschluß der Profilierung axial fixiert sind.

7. Elastisches Lager nach einem der Ansprüche 1 bis 6, dadurch gekennzeichnet, daß der Außendurchmesser der Ringe (9, 10; 27, 28) im Stirnbereich des Gummikörpers (5) gleich oder kleiner als der Außendurchmesser des Gummikörpers (5) ist.

8. Elastisches Lager nach einem der Ansprüche 1 bis 7, dadurch gekennzeichnet, daß der Außendurchmesser der Ringe (9, 10) kleiner als der Außendurchmesser des Gummikörpers (5) ist und
daß das äußere Metallrohr (4) mit seinen stirnseitigen Enden die Ringe (9, 10) zumindest teilweise übergreift, wobei zwischen der Außenrohr-Innenfläche und der zylindrischen Außen-Umfangsfläche der Ringe (9, 10) ein radialer Spalt (11) verbleibt, so daß bei starker radialer, insbesondere in Verbindung mit einer kardanischen Belastung, der radiale Spalt (11) überwunden wird und das äußere Metallrohr (4) an wenigstens einem Ring (9, 10) auf Block geht, wobei der Ring (9, 10) als radialer Anschlag wirkt.

9. Elastisches Lager nach Anspruch 8, dadurch gekennzeichnet, daß die Ringe (27, 28) im Querschnitt mit einer Stufe (20) ausgebildet sind, die sich radial im fertig montierten Zustand wenigstens in den Bereich des äußeren Metallrohrs (4) erstreckt, wobei in Axialrichtung zwischen den Stirnseiten des äußeren Metallrohrs (4) und der zugeordneten Stufe (30) jeweils ein axialer Spalt (31) verbleibt, so daß bei starker axialer Belastung der axiale Spalt (31) überwunden wird und das äußere Metallrohr (4) mit einer Stirnseite an einem Ring (27 bzw. 28) auf Block geht, wobei die Stufe (30) als axialer Anschlag wirkt.

10. Elastisches Lager nach Anspruch 9, dadurch gekennzeichnet, daß die Ringe (27, 28) mit Stufe (30) zweigeteilt sind, wobei auf einen inneren, axial längeren Ring (28a) ein zweiter äußerer, axial kürzerer Ring (28b) zur Bildung der Stufe (30) aufgesteckt ist.

11. Elastisches Lager nach Anspruch 9, dadurch gekennzeichnet, daß die Ringe (27, 28) mit Stufe (30) zweigeteilt sind, wobei ein erster Ring (28c) mit kleinerem Durchmesser und axial anschließend ein zweiter Ring (28d) mit großerem Durchmesser zur Bildung der Stufe (30) auf das innere Metallrohr (3) aufgesteckt sind.

12. Elastisches Lager nach einem der Ansprüche 8 bis 11, dadurch gekennzeichnet, daß im Bereich des radialen und/oder axialen Anschlags am äußeren Metallrohr (4) eine dünne Gummischicht (22) angebracht ist.

13. Elastisches Lager nach einem der Ansprüche 1 bis 12, dadurch gekennzeichnet, daß im Gummikörper (5) wenigstens eine metallische Zwischenlage (7), bevorzugt in der Form eines gerollten Blechteils, eingebracht ist.

14. Elastisches Lager nach Anspruch 13, dadurch gekennzeichnet, daß die Zwischenlage (7) unmittelbar radial nach einer dünnen Gummischicht (6) auf das innere Metallteil (3) folgt und der axiale Schlitz (20) im Herstellzustand keilförmig bis etwa an die Zwischenlage (7) reicht.

15. Elastisches Lager nach einem der Ansprüche 1 bis 14, dadurch gekennzeichnet,
daß das innere Metallteil ein inneres Metallrohr (3) zur Aufnahme eines Schraubenbolzens (15) ist,
daß das elastische Lager bzw. das innere Metallrohr (3) im Einbauzustand von einem U-förmig ausgebildeten, insbesondere mit einem Fahrzeugrahmenteil verbundenen Lagerbock (12) umfaßt ist, wobei die Wangen der U-Schenkel (13, 14) etwa im Abstand der Länge des inneren Metallrohrs (3) liegen, dieses die größte, axiale Erstreckung des Gummi-Metallteils aufweist und die Ringe (9, 10; 27, 28) mit ihren äußeren Stirnseiten im Bereich der Stirnseiten des inneren Metallrohrs (3) liegen bzw. an den Wangen der U-Schenkel (13, 14) anliegen und
daß in den Wangen gegenüberliegende Bohrungen zur Aufnahme des Schraubenbolzens (15) und zur Befestigung des elastischen Lagers bzw. des inneren Metallteils (3) am Lagerbock (12) angebracht sind.

16. Elastisches Lager nach Anspruch 15, dadurch gekennzeichnet, daß eine Bohrung in einer Wange wenigstens den Durchmesser des Außendurchmessers des angrenzenden Ringes (9, 10) hat und in diese Bohrung eine die Bohrung ausfüllende Scheibe (16) als Deckel eingesetzt ist und die Scheibe (16) im Einbauzustand durch die Verschraubung (15, 17) gegen das innere Metallteil (3) gepreßt ist.

## Claims

1. A flexible bearing, in particular for mounting a spring eyelet of a leaf spring on a vehicle,
consisting of a rubber-metal part (2),
with an inner cylindrical metal part (3) as the first bearing component that can be connected, in particular, to a bearing block (12) as the frame part of the vehicle,
with an outer cylindrical metal tube (4) which has an axial slit (20) and which can be pressed with radial prestressing during assembly into an outer receiving eyelet, in particular a spring eyelet, whereby the slit is closed and
with a rubber body (5) adhesively incorporated by vulcanization between two metal parts,
characterized in that
rings (9, 10; 27, 28) are fitted on both sides onto the inner metal part (3), which rings bear in the pressed-in state of the rubber-metal part (2) on the respective associated end sides of the rubber body (5) and which are axially secured, go that the rubber body (5) is stayed in the axial direction by the rings (9, 10; 27, 28) relative to the inner metal part (3).

2. A flexible bearing according to claim 1, characterized in that in the production state, the rings (9, 10; 27, 28) are loosely fitted on the inner metal part (3) and are axially fixed in the final assembled state by lateral cheeks (U-sides 13, 14 or the disk 16) of the bearing block (12).

3. A flexible bearing according to claim 1, characterized in that in the production state, the rings (9, 10; 27, 28) are pressed onto the inner metal part (3) and are secured thereby, in which arrangement there remains a spacing as a free space (18, 19) between each ring (9, 10) and the respective associated end side of the rubber body (5), which space is dimensioned in such a way that in the pressed-in installed state, the free space (18, 19) is filled in by the front-sided rubber bulge as a result of the radial prestressing, and that the rubber body (5) bears with only slight prestressing in the axial direction on the rings (9, 10; 27, 28).

4. A flexible bearing according to claim 1 or 3, characterized in that the rings (9, 10) are pressed on, and before being pressed on, have an inner diameter which is smaller than the outer diameter of the inner cylindrical metal part (3), so that with respect to the inner metal part (3), an annular projection (23) is obtained on each ring (9, 10) which is directed towards the centre of the ring,
that in the zone of the annular projection (23), bevels, (24, 25) or inclined surfaces are arranged on both sides of the ring which extend conically towards the centre of the ring and
that the material of the ring is softer than the material for the inner metal part (3) so that on being pressed on, the annular projection (23) is shorn off.

5. A flexible bearing according to claim 4, characterized in that the angle of the bevel (24, 25) or of the inclined position of the inclined surfaces amounts to approximately 45°.

6. A flexible bearing according to claim 1 or 3, characterized in that the rings (27, 28) and the inner metal part (3) have on their mutual bearing surfaces a coordinated profiled shape, in particular a serration arranged in radial planes, and that the rings (27, 28), being preferably plastic rings, are fitted by catch engagement and are axially fixed by the form-fit of the profiled shape.

7. A flexible bearing according to one of claims 1 to 6, characterized in that the outer diameter of the rings (9, 10; 27, 28) is, in the end zone of the rubber body (5), equal to or smaller than the outer diameter of the rubber body (5).

8. A flexible bearing according to one of claims 1 to 7, characterized in that the outer diameter of the rings (9, 10) is smaller than the outer diameter of the rubber body (5) and that the outer metal tube (4) overlaps, at least partly, the rings (9, 10) with its face ends, in which arrangement there remains a radial gap (11) between the inner surface of the outer tube and the cylindrical outer circumferential surface of the rings (9, 10), so that with a strong radial loading, in particular in conjunction with a cardanic loading, the radial gap (11) is overcome and the outer metal tube (4) is blocked on at least one ring (9, 10), the ring (9, 10) operating as a radial stop.

9. A flexible bearing according to claim 8, characterized in that the rings (27, 28) are formed in cross section with a step (20) which, in the finished assembled state, extends radially at least into the zone of the outer metal tube (4), in which arrangement there remains in each case an axial gap (31) in the axial direction between the end sides of the outer metal tube (4) and the associated step (30), so that with a strong axial loading, the axial gap (30) is overcome and the outer metal tube (4) is blocked with an end side on a ring (27 or 28), the step (30) operating as an axial stop.

10. A flexible bearing according to claim 9, characterized in that the rings (27, 28) with the step (30) are divided into two, in which arrangement, a second outer axially shorter ring (28b) is fitted on an inner axially longer ring (28a) so as to form the step (30).

11. A flexible bearing according to claim 9, characterized in that the rings (27, 28) with the step (30) are divided into two, in which arrangement a first ring (28c) with a smaller diameter, and axially following thereon, a second ring (28d) with a larger diameter are fitted on the inner metal tube (3) so as to form the step (30).

12. A flexible bearing according to one of claims 8 to 11, characterized in that a thin rubber layer (22) is arranged in the zone of the radial and/or axial stop an the outer metal tube (4).

13. A flexible bearing according to one of claims 1 to 12, characterized in that at least one metal intermediate layer (7), preferably in the form of a rolled sheet metal part, is inserted in the rubber body (5).

14. A flexible bearing according to claim 13, characterized in that the intermediate layer (7) follows on radially directly after a thin rubber layer (6) onto the inner metal part (3) and that the axial slit (20) extends in the production state in a wedge shape approximately onto the intermediate layer (7).

15. A flexible bearing according to one of claims 1 to 14, characterized in that
the inner metal part is an inner metal tube (3) for receiving a screw bolt (15),
that in the installed state, the flexible bearing or the inner metal tube (3) is surrounded by a U-shaped bearing block (12) joined in particular to a frame part of the vehicle, in which arrangement the cheeks of the U sides (13, 14) lie approximately at the spacing of the length of the inner metal tube (3), the latter has the greatest axial reach of the rubber-metal part, and the rings (9, 10; 27, 28) lie with their outer end sides in the zone of the end sides of the inner metal tube (3), or bear on the cheeks of the U sides (13, 14), and
that in the cheeks, there are arranged opposed bores for receiving the screw bolt (15) and for securing the flexible bearing or the inner metal part (3) on the bearing block (12).

16. A flexible bearing according to claim 15, characterized in that one bore in a cheek has at least the diameter of the outer diameter of the adjoining ring (9, 10), and that a disk (16) filling this bore is inserted as a lid and that, in its installed state, the disk (16) is pressed by the screwing means (15, 17) against the inner metal part (3).

## Revendications

1. Coussinet élastique, en particulier pour le logement d'un oeil de ressort d'un ressort à lames sur un véhicule,
constitué d'une pièce (2) en caoutchouc-métal, comportant une pièce métallique intérieure cylindrique (3) constituant une première pièce de coussinet qui peut être reliée en particulier à un palier support (12) constituant un élément de châssis du véhicule
un tube métallique extérieur cylindrique (4) qui présente une fente axiale (20) et qui peut être enfoncé à force, avec une précontrainte radiale, lors du montage, dans un oeil de réception extérieur, en particulier un oeil de ressort, la fente étant alors refermée, et
un corps (5) en caoutchouc qui est introduit et vulcanisé avec adhérence entre les deux pièces métalliques,
caractérisé en ce que
sur la pièce métallique intérieure (3), des deux côtés, sont montées des bagues (9,10;27,28) qui, lorsque la pièce en caoutchouc-métal (2) est enfoncée à force, sont accolées aux faces frontales correspondantes respectives du corps (5) en caoutchouc et qui sont fixées en direction axiale de telle sorte que le corps en caoutchouc (5) est en appui relatif, en direction axiale, sur la pièce métallique intérieure (3) par l'intermédiaire des bagues (9,10;27,28).

2. Coussinet élastique selon la revendication 1, caractérisé en ce que, à l'état de fabrication, les bagues (9,10;27,28) sont placées librement sur la pièce métallique intérieure (3) et sont, à l'état de fin de montage, fixées en direction axiale par des faces latérales (branche de U 13,14 ou rondelle 16) du paliersupport 12.

3. Coussinet élastique selon la revendication 1, caractérisé en ce que, à l'état de fabrication, les bagues (9,10;27,28) sont engagées par pression sur la pièce métallique intérieure (3) et sont fixées de cette manière, alors que, entre chaque bague (9,10) et chaque face frontale correspondante du corps en caoutchouc (5), il reste une distance constituant un espace libre (18,19) qui est dimensionné de manière telle que, à l'état enfoncé de montage, l'espace libre (18,19) est comblé par le bombement du caoutchouc de la face frontale du fait de la précontrainte radiale et que le corps en caoutchouc (5) ne repose sur les bagues (9,10;27,28) qu'avec une faible précontrainte en direction axiale .

4. Coussinet élastique selon la revendication 1 ou 3, caractérisé en ce que les bagues (9,10) sont engagées par pression et présentent, avant leur engagement par pression, un diamètre intérieur qui est plus petit que le diamètre extérieur de la pièce métallique intérieure cylindrique (3) si bien qu'il en résulte, par rapport à la pièce métallique intérieure (3), sur chaque bague (9,10), une surépaisseur annulaire (23) dirigée vers le centre de la bague, en ce que, dans la zone de la surépaisseur annulaire (23), sur les deux côtés de la bague, sont aménagés des chanfreins (24,25) ou des surfaces inclinées s'étendant en forme de cône vers le centre de la bague, et
en ce que la matière de la bague est plus molle que la matière de la pièce métallique intérieure (3) si bien que, lors de l'engagement par pression, la surépaisseur annulaire (23) est cisaillée.

5. Coussinet élastique selon la revendication 4, caractérisé en ce que l'angle des chanfreins (24,25) ou l'inclinaison des surfaces inclinées est égal à environ 45°.

6. Coussinet élastique selon la revendication 1 ou 3, caractérisé en ce que les bagues (27,28) et la pièce métallique intérieure (3) présentent, sur leurs faces de contact en regard, un profil correspondant, en particulier des stries (29) disposées dans des plans radiaux et en ce que les bagues (27,28) sont, de préférence, réalisées en matière synthétique, clipsées et fixées en direction axiale par verrouillage de forme du profil.

7. Coussinet élastique selon l'une quelconque des revendications 1 à 6, caractérisé en ce que le diamètre extérieur des bagues (9,10;27,28) est, dans la zone frontale du corps (5) en caoutchouc, inférieur ou égal au diamètre extérieur du corps (5) en caoutchouc.

8. Coussinet élastique selon l'une quelconque des revendications 1 à 7, caractérisé en ce que le diamètre extérieur des bagues (9,10) est plus petit que le diamètre extérieur du corps (5) en caoutchouc et
en ce que le tube métallique extérieur (4), par ses extrémités frontales, recouvre au moins partiellement les bagues (9,10), un interstice radial (11) subsistant entre la surface intérieure du tube extérieur et les surfaces périphériques extérieures cylindriques des bagues (9,10) si bien que, lors d'une charge radiale élevée, en particulier en conjointement avec une charge à la cardan, l'interstice radial (11) disparaît et le tube métallique extérieur (4) vient en contact avec au moins une bague (9,10), la bague (9,10) agissant en tant que butée radiale.

9. Coussinet élastique selon la revendication 8, caractérisé en ce que les bagues (27,28) sont conformées, en section, avec un gradin (30), qui s'étend radialement, à l'état de fin de montage, au moins dans la région du tube métallique extérieur(4), un interstice axial (31) subsistant entre chaque face frontale du tube métallique extérieur (4) et le gradin correspondant (30), si bien que lors d'une charge axiale élevée, l'interstice axial (31) disparaît et le tube métallique extérieur (4) vient en contact, par une face frontale, avec une bague (27 ou 28), le gradin (30) agissant en tant que butée axiale.

10. Coussinet élastique selon la revendication 9, caractérisé en ce que les bagues (27,28) avec gradin (30) sont en deux parties, une deuxième bague extérieure (28b), plus courte en direction axiale, étant placée sur une bague intérieure (28a),plus longue en direction axiale, pour former le gradin (30).

11. Coussinet élastique selon la revendication 9, caractérisé en ce que les bagues (27,28) avec gradin (30) sont en deux parties, une première bague (28c), présentant un diamètre plus petit, et une deuxième bague (28d), présentant un diamètre plus grand et disposée à la suite en direction axiale, étant placées sur la pièce métallique intérieure (3) pour former le gradin (30).

12. Coussinet élastique selon l'une quelconque des revendications 8 à 11, caractérisé en ce qu'une couche mince (22) de caoutchouc est appliquée sur le tube métallique extérieur (4) dans la zone de la butée radiale et/ou axiale.

13. Coussinet élastique selon l'une quelconque des revendications 1 à 12, caractérisé en ce qu'au moins une couche métallique intermédiaire (7), de préférence sous la forme d'une pièce en tôle roulée, est insérée dans le corps en caoutchouc (5).

14. Coussinet élastique selon la revendication 13, caractérisé en ce que la couche intermédiaire (7) suit immédiatement en direction radiale,une couche mince (6) en caoutchouc placée sur la pièce métallique intérieure (3) et en ce que la fente axiale (20) s'étend, à l'état de fabrication, en forme de coin environ jusqu'à la couche intermédiaire (7).

15. Coussinet élastique selon l'une quelconque des revendications 1 à 14, caractérisé en ce que la pièce intérieure métallique est constituée par un tube métallique (3) destiné à recevoir un boulon fileté (15),
en ce que le coussinet élastique ou le tube métallique intérieur (3) est, à l'état de montage, entouré par un palier support (12) en forme de U qui est, en particulier, relié à une pièce de châssis de véhicule, les faces des branches (13,14) du U étant espacées d'une distance à peu près égale à la longueur du tube métallique intérieur (3), ce dernier présente la plus grande étendue axiale de la pièce en caoutchouc-métal et les faces frontales extérieures des bagues (9,10;27,28) se trouvent dans la zone des faces frontales du tube métallique intérieur (3) ou sont contiguës aux faces des branches (13,14) du U, et
en ce que dans les faces des branches du U sont aménagés des perçages opposés destinés à recevoir le bouton fileté (15) et à fixer le coussinet élastique ou la pièce métallique intérieure (3) au palier support.

16. Coussinet élastique selon la revendication 15, caractérisé en ce qu'un perçage dans une face présente un diamètre au moins égal au diamètre extérieur de la bague voisine (9,10), en ce que dans ce perçage est insérée une rondelle (16) remplissant le perçage et servant de bouchon et en ce que la rondelle (16) est, à l'état de montage, comprimée par le boulonnage (15,17) contre la pièce métallique intérieure (3).
